# EUROPEAN PATENT APPLICATION

(11) **EP 4 714 698 A1**
(43) Date of publication of application: **25.03.2026**
(21) Application number: 25198742.6
(22) Date of filing: 28.08.2025
(51) Int. Cl.: B60K 1/04

(54) **LOWER STRUCTURE FOR ELECTRIC VEHICLE**

(30) Priority: 18.09.2024 JP 2024161186
(71) Applicant: Suzuki Motor Corporation, Shizuoka 432-8611 (JP)
(72) Inventor: ARAI, Hayato, Hamamatsu-shi, 432-8611 (JP); MANABE, Tatsuya, Hamamatsu-shi, 432-8611 (JP)
(74) Representative: Plasseraud IP

(57) **Abstract**

[Problem to be Solved] To dispose an electrical component in a limited space below a floor part and to enable the electrical component to be effectively protected.

[Solution] A lower structure for an electric vehicle includes a battery pack disposed below a floor part, and forward from an electric motor, and a vehicle body frame arranged on opposite outer sides of a battery pack 10. Between a front part of the battery pack and the floor part, a space region R is provided, in the space region R, subframes 51 and 52 suspended on the vehicle body frame on opposite sides are arranged, and an electrical component 60 is attached to a part of the subframes 51 and 52 that faces the space region R.

## Description

### [Technical Field]

The present invention relates to lower structures for electric vehicles.

### [Background Art]

For example, as disclosed in Patent Literature 1, an electric vehicle includes a battery pack disposed below a floor panel constituting a floor part of the vehicle. Furthermore, in this example, a driving electric motor is disposed in front of the battery pack in the vehicle.

The battery pack is required to have a higher capacity to extend the cruising distance of the electric vehicle. As a result, the battery pack tends to be larger. As the size of the battery pack increases, the proportion of a space occupied by the battery pack, in a space below a floor part, increases. Furthermore, the electric vehicle including the battery pack, the electric motor, and the like must be equipped with a plurality of electrical components. Therefore, for example, below the floor part, it is necessary to secure a space for disposing the battery pack and to secure a space for arranging the electrical components.

The vehicle of the example includes a so-called cabover structure in which front seats (driver and passenger seats) are arranged above the electric motor. In this example, a space for arranging a plurality of electrical components is secured by providing a space region between the battery pack and the electric motor in a vehicle front-rear direction. Note that the front seats are arranged above the space region in which the electrical components are arranged.

### [Citation List]

### [Patent Literature]

[Patent Literature 1] JP 2021-104759 A

### [Summary of Invention]

### [Problems to be Solved by the Invention]

In addition, in the structure of the example, it may be difficult to arrange electrical components in a case in which a battery pack with a large dimension in a vehicle front-rear direction is mounted. Furthermore, the structure of the example is open below the electrical components, so that while the vehicle is running, the electrical components may be damaged, for example, by muddy water or the like adhering to the electrical components, and small stones or the like hitting the electrical components.

Furthermore, in a vehicle with a specification that a space forward from the inside of a vehicle compartment is narrow, an electric motor may be disposed behind a battery pack. In such an electric vehicle, the battery pack needs to be placed forward. As a result, it may be difficult to provide space in a region for arranging the electrical components. Therefore, in the structure of the example, there has been room for improvement in reducing damage to the electrical components while securing a space in which the electrical components can be arranged below a floor part.

The present invention has been made to solve the problems, and an object thereof is to provide a lower structure for an electric vehicle in which an electrical component is disposed in a limited space below a floor part of the electric vehicle, and which is capable of effectively protecting the electrical component.

### [Means for Solving the Problems]

A lower structure for an electric vehicle according to the present invention for achieving the object includes a battery pack disposed below a floor part of the vehicle, an electric motor disposed behind the battery pack in the vehicle, and vehicle body frame members arranged on opposite outer sides of the battery pack in a vehicle width direction below the floor part, and the respective vehicle body frame members on opposite sides in the vehicle width direction extend in a vehicle front-rear direction. The lower structure for the electric vehicle includes a subframe extending in the vehicle width direction and suspended on the vehicle body frame members on the opposite sides in the vehicle width direction, and a space region is provided between a front part of the battery pack and the floor part. The subframe is disposed above the front part of the battery pack in the vehicle, and an electrical component is attached to a part of the subframe that faces the space region.

### [Advantageous Effect of Invention]

According to the present invention, an electrical component can be disposed in a limited space below a floor part of an electric vehicle, to effectively protect the electrical component.

### [Brief Description of Drawings]

[Figure 1] Figure 1 is a perspective view of a lower structure for an electric vehicle according to the present invention viewed from above a floor part of the electric vehicle.
[Figure 2] Figure 2 is an enlarged perspective view of a battery pack and the like of Figure 1 viewed from below in the vehicle.
[Figure 3] Figure 3 is a schematic perspective view showing a state in which a battery side suspension bracket of Figure 2 is removed.
[Figure 4] Figure 4 is a bottom view of the lower structure for the electric vehicle of Figure 1 viewed from below in the vehicle.
[Figure 5] Figure 5 is a plan view of a subframe and space region of Figure 1 as viewed from above.
[Figure 6] Figure 6 is a schematic end view taken along a line A-A in Figure 1.
[Figure 7] Figure 7 is a schematic end view taken along a line B-B in Figure 4.
[Figure 8] Figure 8 is a perspective view of a subframe, subframe bracket and the like of Figure 5 viewed from below in the vehicle.
[Figure 9] Figure 9 is a perspective view of the subframe, and the like of Figure 5 viewed from inside the vehicle.
[Figure 10] Figure 10 is a schematic end view taken along a line C-C in Figure 5.

### [Mode for Carrying Out the Invention]

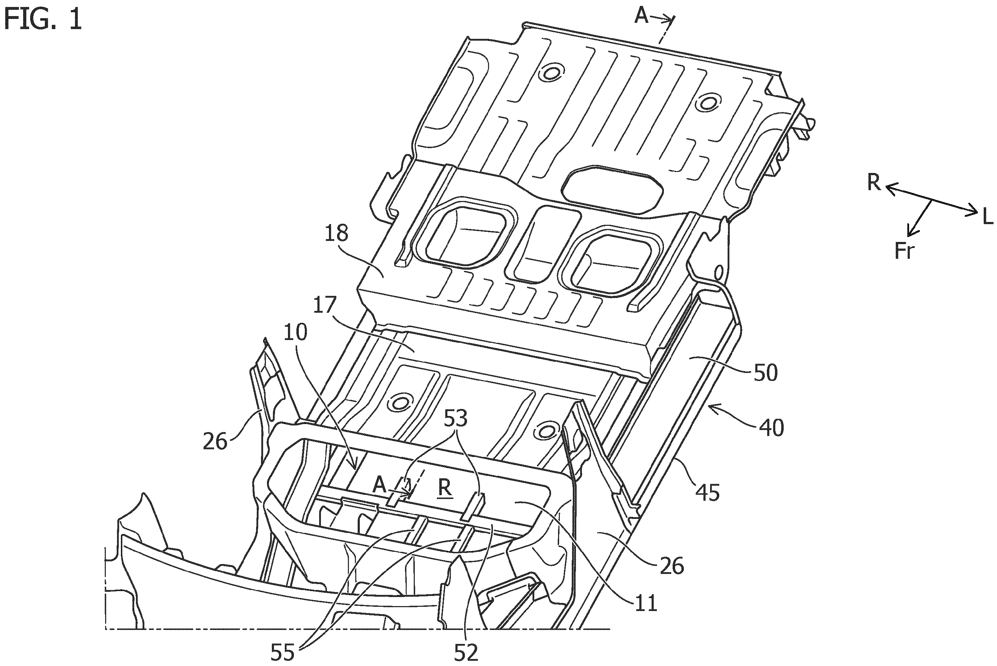

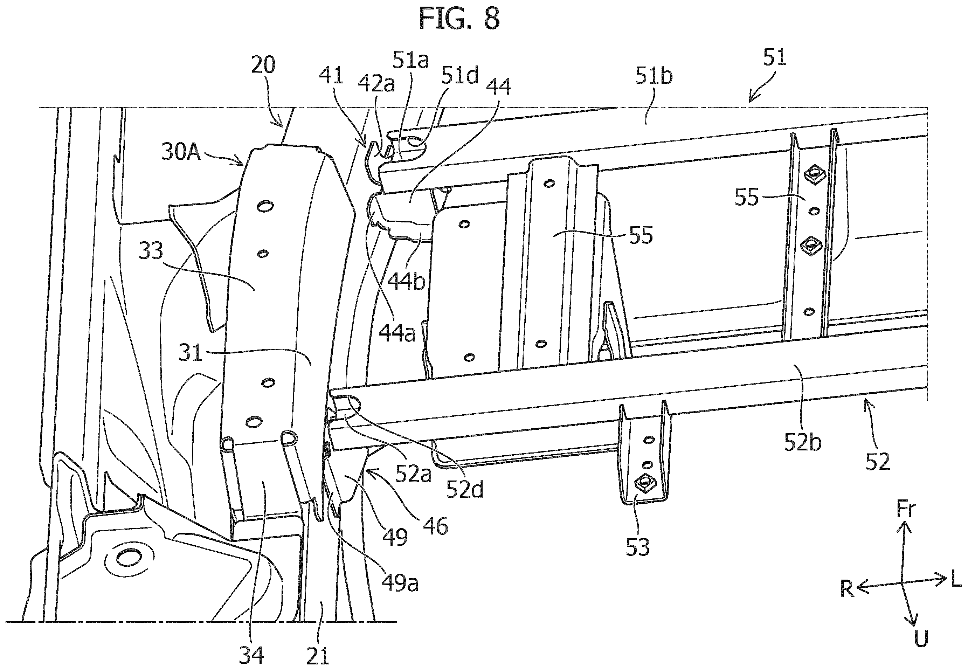

Hereinafter, an embodiment of a lower structure for an electric vehicle according to the present invention will be described with reference to the drawings (Figures 1 to 10). It is to be noted that in the drawings, an arrow Fr direction indicates forward in a vehicle front-rear direction. In the description of the embodiment, "front part (front end) and rear part (rear end)" correspond to a front part and a rear part in the vehicle front-rear direction. Arrows R and L indicate a right side and a left side when an occupant looks forward of the vehicle. Furthermore, arrow U indicates upward in a vehicle up-down direction.

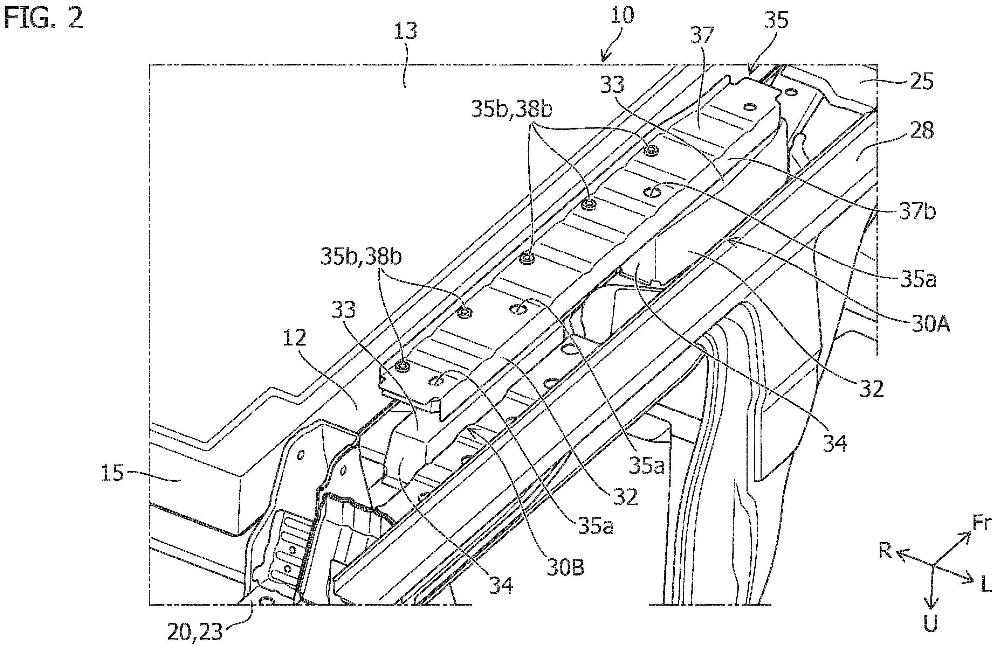

As shown in Figures 1 and 2, the lower structure for the electric vehicle of the present embodiment includes a battery pack 10, a vehicle body frame, subframes 41 and 46, and battery mount members 30A and 30B. In the present embodiment, a space region R is provided between a front part of the battery pack 10 and a floor part in the vehicle up-down direction, and in the space region R, the subframes 41 and 46 extending in a vehicle width direction and suspended on the vehicle body frame on opposite sides in the vehicle width direction are arranged. Furthermore, an electrical component 60 is attached to a part of each subframe that faces the space region R. Hereinafter, members constituting the lower structure of the present embodiment will be described.

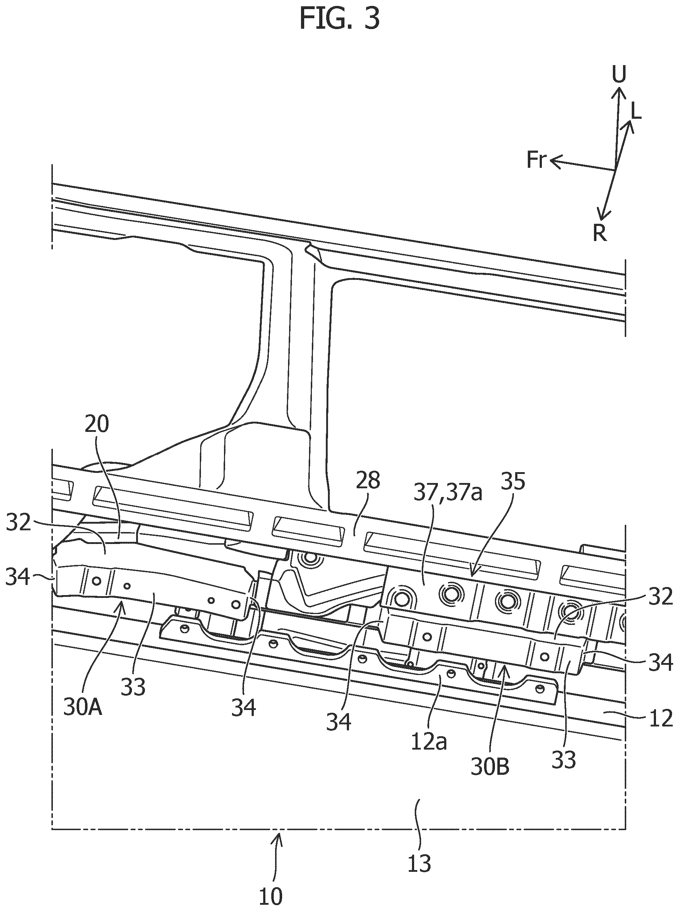

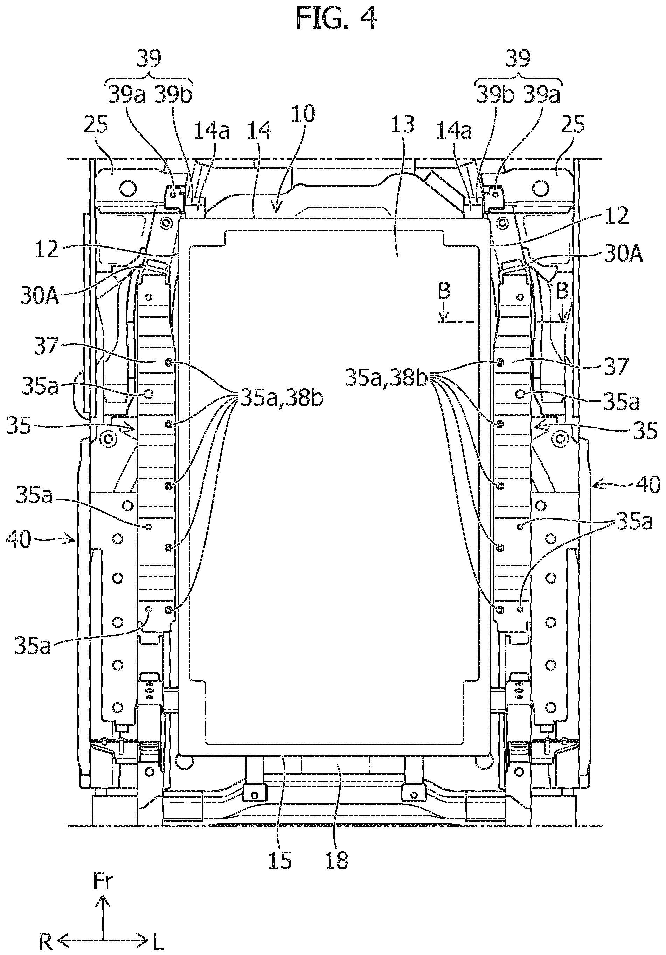

As shown in Figures 1 to 4 and 6, the battery pack 10 is disposed below the floor part of the vehicle, forward of, in the vehicle, an electric motor 61 disposed in a rear part of the vehicle. In this example, the battery pack 10 is a so-called heavy object disposed below a floor panel 17 constituting the floor part of the vehicle. Although the detailed structure of the battery pack 10 will not be described, the battery pack 10 has an outer shape that is substantially rectangular parallelepiped, and includes an upper surface part 11, left and right side wall parts 12, a lower surface part 13, a front wall part 14, and a rear wall part 15 (Figures 3 and 4). The battery pack 10 is suspended on members constituting a vehicle body such as a side member 20, for example, via the battery mount members 30A and 30B, a battery side suspension bracket 35, and a battery front suspension bracket 39. A configuration to which the battery pack 10 is attached will be described later.

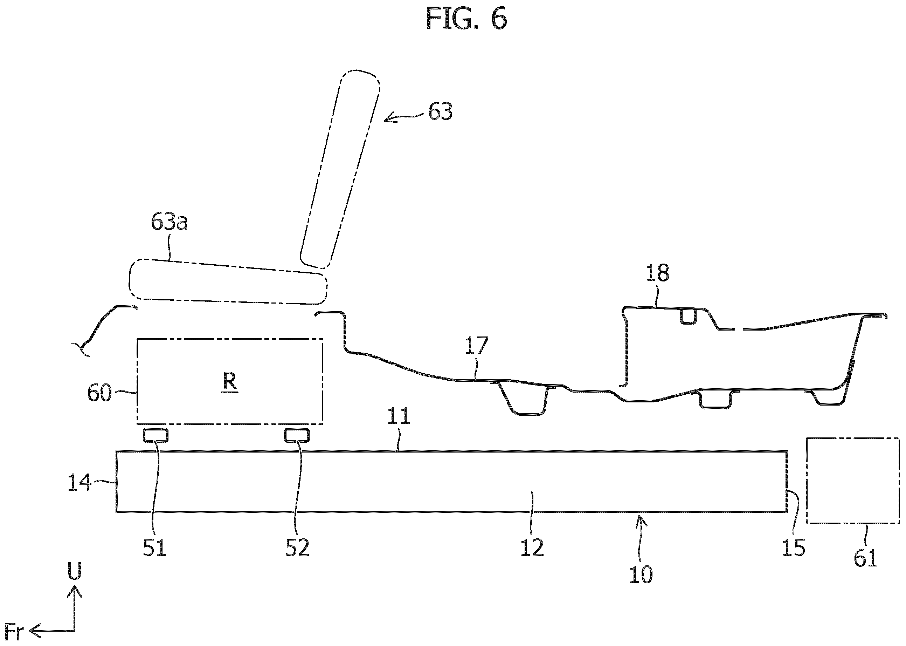

In the electric vehicle of the present embodiment, as shown in Figure 6, the space region R is provided below a cushion part 63a of a front seat 63 in the same manner as in a vehicle including a so-called cabover structure in which the front seat 63 is disposed above the electric motor 61. In the electric vehicle of the present embodiment, the space region R is provided below the floor part and above the upper surface part 11 of the battery pack 10, and in the space region R, the electrical component 60 is disposed. Arrangement of the electrical component 60 will be described later.

In the present embodiment, the electric motor 61 driven by the battery pack 10 is disposed in the rear part of the vehicle. In this example, the drive motor 61 may be disposed, for example, below an upper floor panel 18, behind the battery pack 10. That is, the electric vehicle of the present embodiment is a so-called rear wheel drive type in which rear wheels are driven by the electric motor 61 in the rear part of the vehicle. In addition, a cushion part of a rear seat (not shown) may be installed on the upper floor panel 18.

The vehicle body frame of the present embodiment is a member disposed outside the battery pack 10 in the vehicle width direction, below the floor part, and extending in a vehicle front-rear direction. The vehicle body frame is a highly rigid member formed of a metal material. The vehicle body frame of the present embodiment includes the side member 20.

The side member 20 is a highly rigid member constituting a vehicle body frame and is formed of a metal material. As shown in Figure 3, side members 20 are arranged in a pair on opposite outer sides of a lower part of the vehicle in the vehicle width direction and extend in the vehicle front-rear direction. In this example, the side members are arranged along the side wall parts 12 via a space outside each of the left and right side wall parts 12 of the battery pack 10 in the vehicle width direction. In the vehicle front-rear direction, a front part of each side member 20 is disposed forward from the front wall part 14 of the battery pack 10 in the vehicle, and a rear part of the side member 20 is disposed behind the rear wall part 15 of the battery pack 10 in the vehicle.

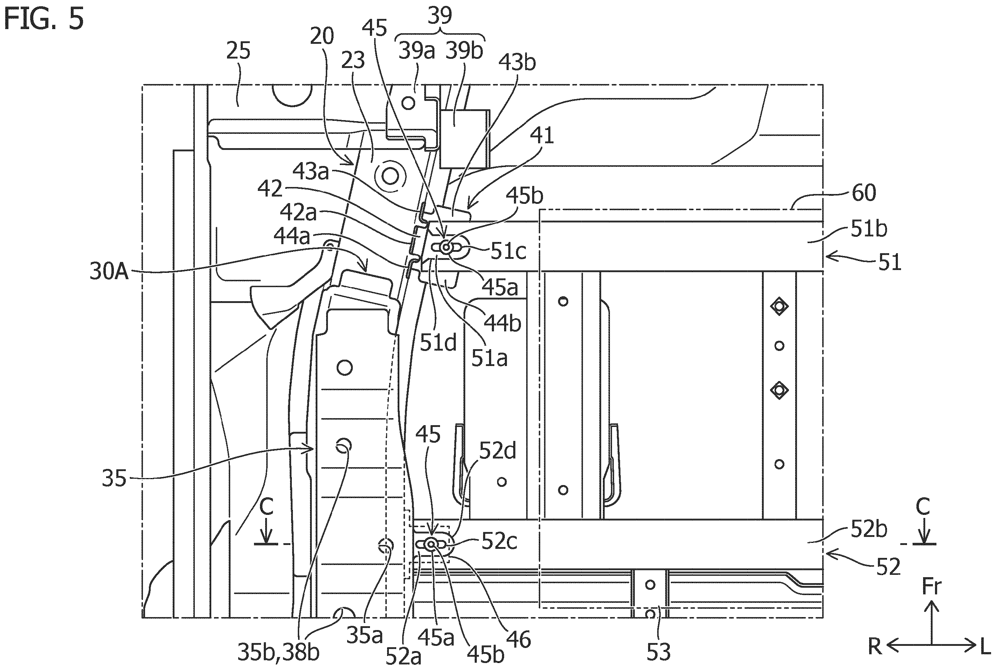

Furthermore, the side member 20 located forward from the battery pack 10 in the vehicle, that is, the front part of the side member 20, extends inclining inward in the vehicle width direction as it is further forward in the vehicle. Furthermore, as shown in Figure 5, the subframe brackets 41 and 46 are attached to the front part of the side member 20. The subframe brackets 41 and 46 will be described later.

Furthermore, as shown in Figure 4, a side brace 25 is joined to the front part of the side member 20. The side brace 25 is a highly rigid member constituting the vehicle body frame and formed of a metal material in the same manner as the side member 20. An upper portion of an inner part of the side brace 25 in the vehicle width direction is joined to a lower portion of the front part of the side member 20, and an outer part of the side brace 25 in the vehicle width direction is joined, for example, to a side inner panel 26 constituting a vehicle body side part. Furthermore, the battery front suspension bracket 39 is attached to a lower portion of the side brace 25. The battery front suspension bracket 39 will be described later.

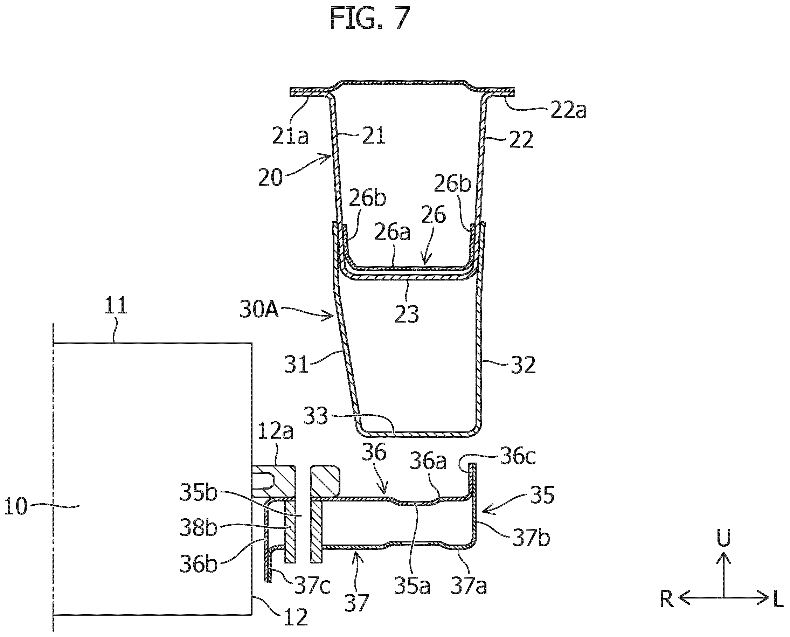

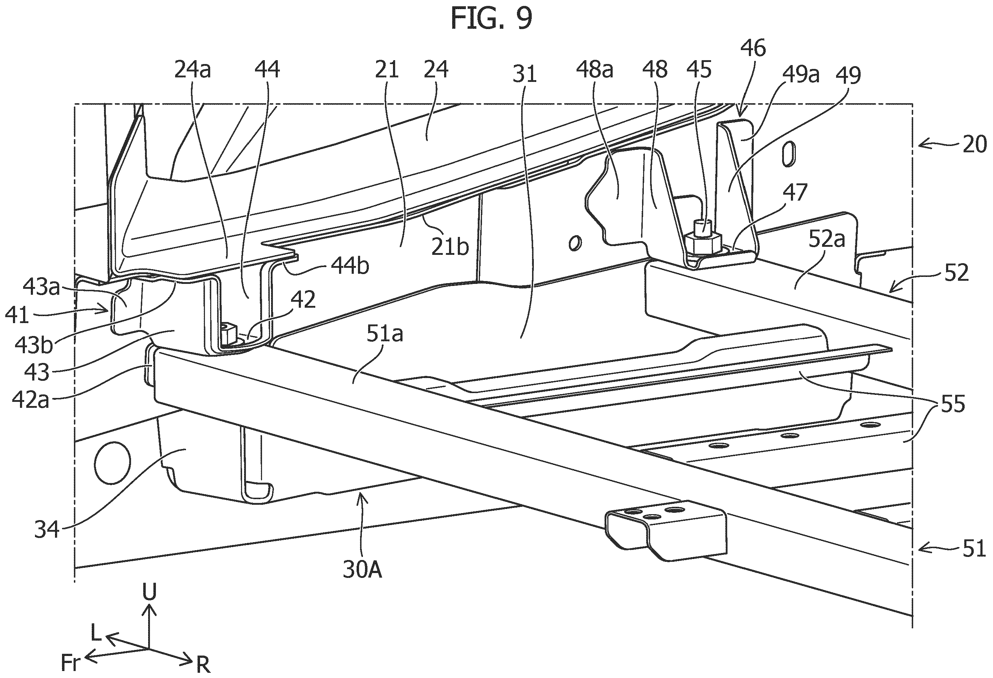

As shown in Figure 7, the front part of the side member 20 has a U-shaped cross section that is open above in the vehicle. That is, the side member 20 has an inner wall part 21, an outer wall part 22, and a bottom surface part 23, and the bottom surface part 23 has a substantially rectangular horizontal surface extending in the vehicle front-rear direction. The inner wall part 21 protrudes upward from an inner end of the bottom surface part 23 in the vehicle width direction and extends in the vehicle front-rear direction. At an upper end of the inner wall part 21, an inner flange portion 21a protruding inward in the vehicle width direction is provided. The outer wall part 22 protrudes upward from an outer end of the bottom surface part 23 in the vehicle width direction and extends in the vehicle front-rear direction. At an upper end of the outer wall part 22, an outer flange portion 22a protruding outward in the vehicle width direction is provided. The inner flange portion 21a and the outer flange portion 22a are joined, for example, to a lid member 24 by spotwelding. A first subframe bracket 41, described later, is joined to a protruding portion 24a of the lid member 24 via the inner flange portion 21a (Figure 9).

Next, the battery mount members 30A and 30B will be described. As shown in Figures 2 and 3, in the present embodiment, two battery mount members (front battery mount member 30A, rear battery mount member 30B) are arranged along the bottom surface part 23 of the side member 20 and spaced apart from each other in the vehicle front-rear direction. The front battery mount member 30A and the rear battery mount member 30B are formed of a metal material and have high rigidity. Furthermore, the front battery mount member 30A and the rear battery mount member 30B extend in the vehicle front-rear direction along the side wall part 12 of the battery pack 10 and are joined to a lower part of the side member 20 by spotwelding. In addition, a side body outer panel 28 is disposed outside the side member 20, the front battery mount member 30A, and the rear battery mount member 30B in the vehicle width direction.

The front battery mount members 30A are arranged side by side below the side members 20. Similarly, the rear battery mount members 30B are arranged side by side below the side members 20. By joining the front battery mount member 30A and the rear battery mount member 30B to the lower part of the side member 20, it is possible to construct a structural body having high rigidity.

Furthermore, the side member 20 and the battery mount members 30A and 30B are arranged vertically one above the other, and the side member 20 and the battery mount members 30A and 30B accordingly have a predetermined vertical length (height) and protect the outer side of the battery pack 10 in the vehicle width direction as protective walls extending in the vehicle front-rear direction.

Here, structures of the battery mount members 30A and 30B will be described. In the present embodiment, as an example, the structure of the front battery mount member 30A will be described in detail. As shown in Figure 7, the front battery mount member 30A has an inner wall part 31, an outer wall part 32, and a bottom surface part 33, and has a U-shaped cross section similarly to the side member 20.

An upper portion of the inner wall part 31 of the front battery mount member 30A is joined to the inner wall part 21 of the side member 20 by spotwelding. Similarly, an upper portion of the outer wall part 32 of the front battery mount member 30A is joined to the outer wall part 22 of the side member 20 by spotwelding. Consequently, a closed cross-sectional structure is constructed in a cross section by the front battery mount member 30A and the bottom surface part 23 of the side member 20. Thus, rigidity is improved, and the battery pack 10 can be suspended stably.

As shown in Figure 2, a closing part 34 is provided at front and rear ends of the front battery mount member 30A. The closing part 34 has a plate shape joined to the inner wall part 31, the outer wall part 32 and the bottom surface part 33 of the battery mount member 30. Furthermore, a flange is provided at an upper end of the closing part 34, and the flange is joined to the bottom surface part 23 of the side member 20. Consequently, a closed space is formed inside the rear battery mount member 30B, and a closed cross-sectional structure is constructed in a flat cross section of the front battery mount member 30A, so that the front battery mount member 30A can secure high rigidity.

Additionally, in the present embodiment, the cross-sectional structure of the front battery mount member 30A is described in detail as above, and the cross-sectional structure of the rear battery mount member 30B is also constructed in the same manner as the front battery mount member 30A.

Here, a configuration in which the battery pack 10 is suspended on the vehicle body will be described. The side wall part 12 of the battery pack 10 is suspended on the vehicle body such as the side member 20 or the like via the battery mount members 30A and 30B and the battery side suspension bracket 35. Furthermore, the front wall part 14 of the battery pack 10 is suspended on the side braces 25 via the battery front suspension brackets 39.

The battery side suspension bracket 35 is suspended on the bottom surface part 33 of the battery mount member 30A, 30B via a coupling member, and is disposed below the bottom surface part 33 of the battery mount member 30A, 30B. In this example, as shown in Figure 4, the battery side suspension bracket 35 extends in the vehicle front-rear direction along the side wall part 12 of the battery pack 10.

The battery side suspension bracket 35 has a front end placed slightly behind the front end of the front battery mount member 30A. Note that locations of the front end of the battery side suspension bracket 35 and the front end of the front battery mount member 30A in the vehicle front-rear direction may be aligned. Similarly, the battery side suspension bracket 35 has a rear end placed slightly forward from a rear end of the rear battery mount member 30B. Note that locations of the rear end of the battery side suspension bracket 35 and the rear end of the rear battery mount member 30B may be aligned in the vehicle front-rear direction.

As shown in Figures 2 to 4, the battery side suspension bracket 35 of the present embodiment is a substantially rectangular parallelepiped member extending in the vehicle front-rear direction and is a member having a cutout provided in a portion of a side part and disposed along the side wall part 12 of the battery pack 10. As shown in Figure 7, the battery side suspension bracket 35 includes an upper member 36 and a lower member 37.

As shown in Figure 7, the upper member 36 has an upper surface portion 36a, an inner wall portion 36b, and an outer flange portion 36c. The upper surface portion 36a is spaced downward from the lower surface of the bottom surface part 33 of the battery mount member 30. The outer flange portion 36c is a portion protruding upward from an outer end of the upper surface portion 36a in the vehicle width direction and extending in the vehicle front-rear direction. The inner wall portion 36b is a wall portion extending downward, in the vehicle, from an inner end of the upper surface portion 36a in the vehicle width direction and is disposed at an interval outside the side wall part 12 of the battery pack 10 in the vehicle width direction.

The lower member 37 includes a bottom surface portion 37a, an outer wall portion 37b, and an inner flange portion 37c as shown in Figure 7. The bottom surface portion 37a is spaced downward from the upper surface portion 36a of the upper member 36. The outer wall portion 37b is a wall portion extending upward, in the vehicle, from an outer end of the bottom surface portion 37a in the vehicle width direction. Furthermore, the outer wall portion 37b is disposed slightly inside the outer wall part 32 of the battery mount member 30 in the vehicle width direction and below the bottom surface part 33 of the battery mount member 30.

Furthermore, an upper portion of the outer wall portion 37b of the lower member 37 protrudes upward from the upper surface portion 36a and is joined to the outer flange portion 36c by spotwelding. The inner flange portion 37c is a portion protruding downward from an inner end of the bottom surface portion 37a in the width direction and extending in the vehicle front-rear direction. A lower portion of the inner wall portion 36b of the upper member 36 is joined to the inner flange portion 37c by spotwelding.

Furthermore, in the battery side suspension bracket 35, as shown in Figure 7, a plurality of outer coupling portions 35a and a plurality of inner coupling portions 35b are provided. The plurality of outer coupling portions 35a are spaced apart along a longitudinal direction of the battery side suspension bracket 35 (vehicle front-rear direction), outside the center of the battery side suspension bracket 35 in the vehicle width direction. The outer coupling portions 35a are coupled to the bottom surface part 33 of the battery mount member 30 via coupling members.

The plurality of inner coupling portions 35b are spaced apart along the longitudinal direction of the battery side suspension bracket 35 (vehicle front-rear direction), inside the center of the battery side suspension bracket 35 in the vehicle width direction. The inner coupling portions 35b may be arranged inside the outer coupling portions 35a. Each inner coupling portion 35b is a portion coupled to a protruding portion 12a protruding outward from the side wall part 12 of the battery pack 10 in the vehicle width direction, and the protruding portion 12a and the inner coupling portion 35b are coupled by a coupling member.

As described above, the battery pack 10 is suspended on the battery side suspension bracket 35 via the coupling member, and the battery side suspension bracket 35 is coupled to the battery mount member 30 via the coupling member.

Next, the battery front suspension bracket 39 will be described. As shown in Figure 5, the battery front suspension bracket 39 includes a main body portion 39a and a battery connecting portion 39b. The main body portion 39a is a metal member extending downward from the lower surface of the side brace 25 in the vehicle. The main body portion 39a of the battery front suspension bracket 39 is suspended on the lower surface of the side brace 25 via a coupling member (not shown) on the lower surface of the side brace 25. The coupling of the side brace 25 and the battery front suspension bracket 39 is the same as the coupling of the side member 20 and the battery side suspension bracket 35.

The battery connecting portion 39b is a substantially rectangular parallelepiped portion placed inside the main body portion 39a in the vehicle width direction and extending in the vehicle front-rear direction. As shown in Figure 4, the battery connecting portion 39b is connected to a front protruding portion 14a protruding from the front wall part 14 of the battery pack 10 to the front of the vehicle. Consequently, the front wall part 14 of the battery pack 10 is suspended on the vehicle body via the battery front suspension bracket 39.

Next, a subframe will be described. As shown in Figure 5, the subframe of the present embodiment includes a first subframe 51 and a second subframe 52. The first subframe 51 and the second subframe 52 are metal members extending in the vehicle width direction and having, for example, a substantially rectangular cross-sectional shape extending in the vehicle front-rear direction. In the present embodiment, the first subframe 51 is spaced forward from the second subframe 52 in the vehicle.

As shown in Figure 5, the first subframe 51 is suspended on the side member 20 via a first subframe bracket 41, and the second subframe 52 is suspended on the side member 20 via a second subframe bracket 46. The first subframe 51 and the second subframe 52 are arranged in the space region R as described above, and the electrical component 60 is attached to an upper surface portion of the first subframe 51 and an upper surface portion of the second subframe 52 as shown in Figure 6.

Since the electric vehicle of the present embodiment is the rear wheel drive type, the electric motor 61 is disposed below a floor part of a luggage compartment in the rear part of the vehicle. This makes it difficult to dispose the battery pack 10 in a region in which the electric motor 61 is disposed, and the battery pack 10 is therefore disposed forward in the vehicle. In the present embodiment, the space region R is provided above a front portion of the upper surface part 11 of the battery pack 10, and the electrical component 60 is attached to the space region R via the first subframe 51 and the second subframe 52. This makes it possible to reduce splashing of muddy water onto the electrical component 60 and collision with any flying stones while the vehicle is running. As a result, failure of the electrical component 60 can be avoided.

Furthermore, the first subframe 51 and the second subframe 52 allow the electrical component 60 to be stored in the space region R and can prevent contact between the upper surface part 11 of the battery pack 10 and the electrical component 60. As a result, it is possible to reduce occurrences of failures of the battery pack 10 and the electrical component 60.

In this example, in the second subframe 52, two rear stays 53 are spaced apart from each other in the vehicle width direction. The rear stays 53 are joined to the second subframe 52 and extend from the second subframe 52 to the rear of the vehicle. In this example, a rear end of each rear stay 53 is a free end. Furthermore, intermediate stays 55 may be arranged to connect the first subframe 51 and the second subframe 52. The intermediate stays 55 extend in the vehicle front-rear direction, and a front part of each intermediate stay 55 is joined to the first subframe 51, while a rear part of the intermediate stay 55 may be joined to the second subframe 52. By providing the rear stays 53 and the intermediate stays 55, it is possible to further stabilize the attached state of the electrical component 60. As a result, it is possible to stably maintain a state in which the battery pack 10 and the electrical component 60 are spaced apart from each other.

Furthermore, in the present embodiment, the front battery mount member 30A is attached to the side member 20, and the battery pack 10 includes the protruding portion 12a (suspension portion) suspended on the front battery mount member 30A.

Consequently, the battery pack 10 can be disposed below the side member 20 in the vehicle. As a result, it is possible to secure a volume of the space region R. As a result, a larger electrical component 60 can be disposed in the space region R.

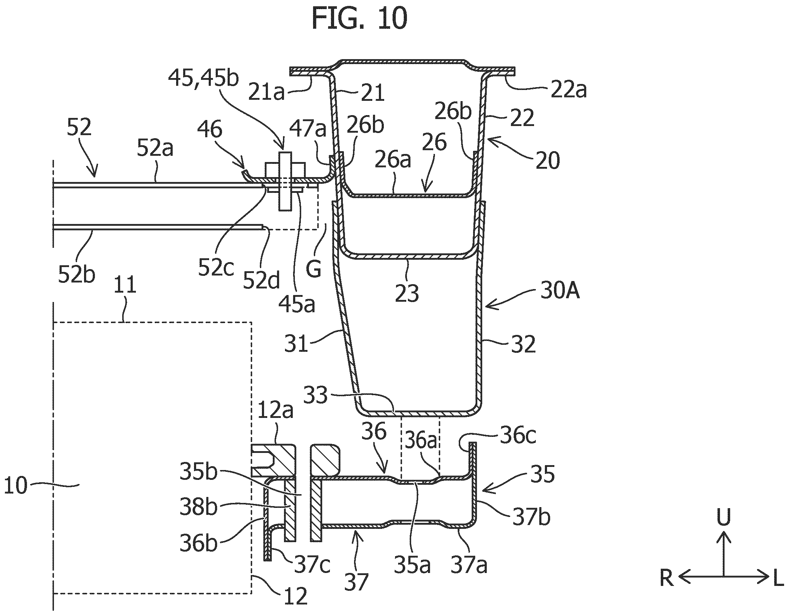

In the present embodiment, the first subframe 51 and the second subframe 52 are suspended on the inner wall part 21 of the side member 20. Furthermore, as viewed in the vehicle width direction, at least a part of the first subframe 51 and at least a part of the second subframe 52 are placed to overlap the side member 20. For example, as shown in Figure 10, the second subframe 52 and the lower part of the side member 20 are arranged side by side in the vehicle width direction, and the second subframe 52 is joined to the inner wall part 21 of the side member 20. Furthermore, in the present embodiment, respective lower ends of the first subframe 51 and the second subframe 52 are placed above a lower end of the side member 20.

The first subframe 51 and second subframe 52 supporting the electrical component 60 are arranged between the side members 20 on the opposite sides in the vehicle width direction, so that when an impact load due to side collision or the like acts on vehicle body side parts, the side members 20 can receive the impact load and can reduce the impact load acting on the first subframe 51 and the second subframe 52. Therefore, the deformation of the first subframe 51 and the second subframe 52 by the impact load can be reduced, so that damage to the electrical component 60 and the battery pack 10 can be reduced.

Additionally, in the present embodiment, the first subframe 51 and the second subframe 52 extend linearly in the vehicle width direction, but they are not limited to this example. For example, an intermediate portion of the first subframe 51 or the like in the vehicle width direction may be curved to be convex upward in the vehicle. In this case, even if a load is applied to the first subframe 51 or the like from outside in the vehicle width direction, the intermediate portion of the first subframe 51 or the like is deformed upward, so that contact between the battery pack 10 and the first subframe 51 or the like can be reduced. As a result, the battery pack 10 can be effectively protected against impact load.

Furthermore, in the present embodiment, as shown in Figure 10, a gap G is formed between the first subframe 51 and second subframe 52 and the side member 20 in the vehicle width direction, and the first subframe 51 and the second subframe 52 are suspended slidably in the vehicle width direction on the side member 20.

In the present embodiment, as shown in Figure 5, the first subframe 51 is suspended on the inner wall part 21 of the side member 20 via the first subframe bracket 41. Therefore, an outer end of the first subframe 51 in the vehicle width direction is placed in a state in which the gap G is maintained at the inner wall part 21. Similarly, the second subframe is suspended on the inner wall part 21 of the side member 20 via the second subframe bracket 46. Therefore, an outer end of the second subframe in the vehicle width direction is placed in a state in which the gap G is maintained at the inner wall part 21.

In the configuration, even if the side member 20 receives an impact load from outside in the vehicle width direction to be deformed toward the inside the vehicle, the gap G is provided, so that direct transmission of the impact load to the first subframe 51 and the second subframe 52 can be reduced. Furthermore, since the first subframe 51 and the second subframe 52 are slidable, the first subframe 51 and the second subframe 52 can slide in the vehicle width direction by the length of the gap G in the vehicle width direction, to absorb the impact load.

In the present embodiment, a long hole 51c, 52c extending in the vehicle width direction is provided on one of the bracket 41, 46 and the subframe 51, 52, and a shaft portion 45 penetrating the long hole 51c, 52c is provided on the other, and the subframe 51, 52 and the bracket 41, 46 are connected in a state in which the shaft portion 45 is movable in the long hole 51c, 52c.

In the present embodiment, as shown in Figures 5 and 9, the long holes 51c and 52c are provided in the first subframe 51 and the second subframe 52 and the shaft portions 45 are provided in the first subframe bracket 41 and the second subframe bracket 46. The long hole 51c is formed on an upper surface portion 51a of the first subframe 51 and penetrates in the vehicle up-down direction. Furthermore, a cutout 51d is provided at an outer end of a lower surface portion 51b, in the vehicle width direction, corresponding to the long hole 51c. By providing the cutout 51d, an operation space is secured for attaching the first subframe 51 to the first subframe bracket 41. In addition, the long hole 52c of the second subframe 52 is provided in an upper surface portion 52a and a lower surface portion 52b of the second subframe 52 in the same manner as the long hole 51c of the first subframe 51.

For example, the first subframe bracket 41 disposed on the right side in the vehicle width direction has a substantially rectangular lower surface part 42, a front wall part 43, and a rear wall part 44 as shown in Figures 5, 8 and 9. The lower surface part 42 faces downward in the vehicle, and for example, a circular through hole is formed. The front wall part 43 extends upward from a front end of the lower surface part 42 in the vehicle. The rear wall part 44 extends upward from a rear end of the lower surface part 42 in the vehicle.

A lower flange 42a protruding downward in the vehicle is provided outside the lower surface part 42 in the vehicle width direction. The lower flange 42a is joined to the inner wall part 21 of the side member 20 by spotwelding. A front outer flange 43a protruding to the front of the vehicle is provided outside the front wall part 43 in the vehicle width direction, and at an upper end of the front wall part 43, a front upper flange 43b protruding to the front of the vehicle is provided. The front outer flange 43a is joined to the inner wall part 21 of the side member 20, and the front upper flange 43b is joined to the inner flange portion 21a of the side member 20.

Outside the rear wall part 44 in the vehicle width direction, a rear outer flange 44a protruding to the rear of the vehicle is provided, and at an upper end of the rear wall part 44, a rear upper flange 44b protruding to the rear of the vehicle is provided. The rear outer flange 44a is joined to the inner wall part 21 of the side member 20, and the rear upper flange 44b is joined to the inner flange portion 21a of the side member 20.

The upper surface part of the first subframe 51, for example, in a state of abutment, is suspended on the lower surface part 42 of the first subframe bracket 41. The coupling member 45 (shaft portion) may be fixed to the first subframe bracket 41. For example, the substantially columnar coupling member 45 extending in the vehicle up-down direction may be fixed to the lower surface part 42 in a state in which the coupling member 45 penetrates a through hole provided in the first subframe bracket 41.

As shown in Figures 5 and 9, a large diameter portion 45a that bulges radially outward may be provided in a lower portion of a penetrating portion 45b of the coupling member 45. The penetrating portion 45b of the coupling member 45 penetrates the long hole 51c of the first subframe 51, and the large diameter portion 45a is placed below the upper surface portion 51a of the first subframe 51. For example, the coupling member 45 is a bolt with a bolt head placed on the lower surface part 42 and a nut (large diameter portion 45a) placed on the lower surface of the upper surface portion 51a, so that the first subframe 51 is suspended on the first subframe bracket 41. Here, the first subframe 51 is suspended in a state of being movable parallel to the first subframe bracket 41 along a longitudinal direction of the long hole 51c (vehicle width direction).

With such a configuration as above, even if the side member 20 receives an impact load from outside in the vehicle width direction to be deformed inward in the vehicle, the first subframe 51 can move in parallel by the length of the long hole 51c in the vehicle width direction, and the direct transmission of the impact load can be reduced.

The second subframe 52 and the second subframe bracket 46 further include the same structure as that of the first subframe 51 and the first subframe bracket 41, and the same effect can be obtained. The second subframe bracket 46 of the present embodiment has a lower surface part 47, a front wall part 48, and a rear wall part 49. The lower surface part 47 is provided with a through hole. The through hole is placed to communicate with the long hole 52c provided in the upper surface portion 52a of the second subframe 52, and the coupling member 45 is disposed to penetrate the through hole and the long hole 52c, fixing the second subframe 52 to the second subframe bracket 46.

The front wall part 48 extends upward from a front end of the lower surface part 47 in the vehicle. In this example, an inner end of the front wall part 48 in the vehicle width direction is inclined outward in the vehicle width direction as it extends upward in the vehicle. At an outer end of the front wall part 48 in the vehicle width direction, a front flange 48a protruding to the front of the vehicle is provided. The front flange 48a is joined to the inner wall part 21 of the side member 20 by spotwelding. The rear wall part 49 extends upward from a rear end of the lower surface part 47 in the vehicle, and similarly to the front wall part 48, an inner end of the rear wall part 49 in the vehicle width direction is inclined outward in the vehicle width direction as it extends upward in the vehicle. Furthermore, at an outer end of the rear wall part 49 in the vehicle width direction, a rear flange 49a protruding to the rear of the vehicle is provided, and the rear flange 49a is joined to the inner wall part 21 of the side member 20 by spotwelding.

Since the direct transmission of the impact load to the first subframe 51 and the second subframe 52 is reduced, the deformation of the first subframe 51 and the second subframe 52 is reduced. As a result, the electrical component 60 and the battery pack 10 can be effectively protected from impact load.

The description of the present embodiment is an example for illustrating the present invention and does not limit the invention as claimed in the claims. Furthermore, the configuration of each part of the present invention is not limited to the embodiment, and various modifications can be made within the technical scope claimed in the claims.

For example, in the present embodiment, the long hole 51c is provided in the first subframe 51 and the second subframe 52, and the shaft portion is provided in the first subframe bracket 41 and the second subframe bracket 46, but the invention is not limited thereto. For example, long holes may be provided in the first subframe bracket 41 and the second subframe bracket 46, and shaft portions may be provided in the first subframe 51 and the second subframe 52.

Furthermore, the first subframe 51 and the second subframe 52 may be provided above the locations of the present embodiment, and the electrical component 60 may be attached to lower parts of the first subframe 51 and the second subframe 52.

In the present embodiment, the vehicle body frame is described as the side member 20, but it is not limited thereto. For example, the vehicle body frame may be a side sill.

### [Reference Signs List]

- 10: Battery pack
- 11: Upper surface part
- 12: Side wall part
- 12a: Protruding portion
- 13: Lower surface part
- 14: Front wall part
- 14a: Front protruding portion
- 15: Rear wall part
- 17: Floor panel
- 18: Upper floor panel
- 20: Side member
- 21: Inner wall part
- 21a: Inner flange portion
- 22: Outer wall part
- 22a: Outer flange portion
- 23: Bottom surface part
- 24: Lid member
- 25: Side brace
- 26: Side inner panel
- 28: Side body outer panel
- 30A: Front battery mount member
- 30B: Rear battery mount member
- 31: Inner wall part
- 32: Outer wall part
- 33: Bottom surface part
- 34: Closing part
- 35: Battery side suspension bracket
- 36: Upper member
- 36a: Upper surface portion
- 36b: Inner wall portion
- 36c: Outer flange portion
- 37: Lower member
- 37a: Bottom surface portion
- 37b: Outer wall portion
- 37c: Inner flange portion
- 39: Battery front suspension bracket
- 39a: Main body portion
- 39b: Battery connecting portion
- 41: First subframe bracket
- 42: Lower surface part
- 42a: Lower flange
- 42b: Through hole
- 43: Front wall part
- 43a: Front outer flange
- 43b: Front upper flange
- 44: Rear wall part
- 44a: Rear outer flange
- 44b: Rear upper flange
- 45: Coupling member
- 45a: Large diameter portion
- 45b: Penetrating portion
- 46: Second subframe bracket
- 47: Lower surface part
- 47a: Lower flange
- 48: Front wall part
- 48a: Front flange
- 49: Rear wall part
- 49a: Rear flange
- 51: First subframe
- 51a: Upper surface portion
- 51b: Lower surface portion
- 51c: Long hole
- 51d: Cutout
- 52: Second subframe
- 52a: Upper surface portion
- 52b: Lower surface portion
- 52c: Long hole
- 52d: Cutout
- 53: Rear stay
- 55: Intermediate stay
- 60: Electrical component
- 61: Electric motor
- 63: Front seat
- 63a: Cushion part
- R: Space region
- G: Gap

## Claims

1. A lower structure for an electric vehicle comprising:
a battery pack disposed below a floor part of the vehicle, forward of, in the vehicle, an electric motor disposed in a rear part of the vehicle, and
a vehicle body frame arranged on opposite outer sides of the battery pack in a vehicle width direction, below the floor part, and extending in a vehicle front-rear direction, **characterized in that**:
between a front part of the battery pack and the floor part in a vehicle up-down direction, a space region is provided,
in the space region, a subframe extending in the vehicle width direction and suspended on the vehicle body frame on opposite sides in the vehicle width direction is disposed, and
an electrical component is attached to a part of the subframe that faces the space region.

2. The lower structure for the electric vehicle according to claim 1, wherein
a battery mount member for suspending the battery pack is attached to the vehicle body frame, and
the battery pack includes a suspension portion suspended on the battery mount member.

3. The lower structure for the electric vehicle according to claim 1 or 2, wherein
the subframe is suspended on an inner side surface of the vehicle body frame in the vehicle width direction, and is disposed so that at least a part of the subframe overlaps the vehicle body frame as viewed in the vehicle width direction, and
the subframe has a lower end placed above a lower end of the vehicle body frame.

4. The lower structure for the electric vehicle according to claim 3, wherein
a gap is formed between the subframe and the vehicle body frame in the vehicle width direction, and
the subframe is suspended slidably in the vehicle width direction on the vehicle body frame.

5. The lower structure for the electric vehicle according to claim 3, wherein
the subframe is suspended on the vehicle body frame via a bracket,
in one of the bracket for attachment and the subframe, a long hole extending in the vehicle width direction is provided, and in the other, a shaft portion that penetrates the long hole is provided, and
the subframe and the bracket are connected in a state in which the shaft portion is movable in the long hole in the vehicle width direction.
